# EUROPEAN PATENT APPLICATION

(11) **EP 4 841 305 A1**
(43) Date of publication of application: **18.11.2026**
(21) Application number: 26176427.8
(22) Date of filing: 05.05.2026
(51) Int. Cl.: G01S 17/00, G01S 7/497, G01S 17/89, G01S 17/931, G06F 30/13, G06F 30/15

(54) **AUTOMATED LIDAR SENSORS PLACEMENT AND OPTIMIZATION SYSTEM AND METHOD FOR LIDAR SENSORS PLACEMENT AND OPTIMIZATION**

(30) Priority: 15.05.2025 FI 20253196
(71) Applicant: Unikie Oy, 33720 Tampere (FI)
(72) Inventor: Salo, Jouni, 00200 Helsinki (FI); Jussmäki, Sakke, 02120 Espoo (FI)
(74) Representative: Moosedog Oy

(57) **Abstract**

Disclosed is an automated lidar sensors placement and optimization system (100). The system comprises a processing unit (102) configured to receive and analyze, using a three-dimensional model integration module (102A), a three-dimensional site layout data to obtain environmental information of an operational environment (104). The processing unit (102) calculates, using a lidar placement algorithm (102B), the optimal quantity, positions, and orientations of lidar sensors (106), based on the three-dimensional site layout data and lidar sensor configurations. The lidar sensor configurations include at least one of: a field-of-view (FoV) of the lidar sensors, range specifications of the lidar sensors, and luminance of the lidar sensors. The processing unit (102) further generates, using an output generator module (102C), a placement map, specifying precise coordinates of the operational environment (104) for installation of lidar sensors (106) and orientations for each lidar sensor to achieve comprehensive coverage of the operational environment (104).

## Description

### TECHNICAL FIELD

The present disclosure relates to the field of lidar-based environmental scanning and lidar sensor placement. More specifically, the disclosure pertains to methodologies and systems for determining optimal placement of lidar sensors in various operational environments.

### BACKGROUND

Lidar sensor technology is widely utilized in various applications, including autonomous navigation, industrial automation, and security surveillance, due to its capability to provide high-precision spatial awareness. Lidar sensors function by emitting laser pulses and measuring time taken for reflected signals to return, enabling generation of detailed three-dimensional (3D) representations of a surrounding environment. The lidar sensors are commonly deployed in operational environments where accurate object detection and spatial mapping are critical, such as warehouses, logistics hubs, smart cities, and large-scale industrial facilities. The effectiveness of lidar-based systems is largely dependent on the strategic placement of sensors to ensure optimal coverage, minimize blind spots, and enhance overall system performance.

Existing solutions to deploy lidar sensors primarily rely on manual planning, where engineers and technicians determine lidar sensors' locations based on site layout analysis, empirical rules, and prior experience. The existing solutions solely rely on trial-and-error methods, thus becoming increasingly inefficient and prone to error. Manual sensor placement often results in coverage gaps, redundant sensors, and suboptimal system performance, leading to increased costs and inefficient resource utilization. Additionally, factors such as sensor field-of-view constraints, range limitations, cabling requirements, and environmental obstructions further complicate placement process, often requiring extensive trial and error to achieve adequate coverage. The existing solutions also lack integration with computational modeling tools and optimization techniques, making them time-consuming and labor-intensive. As a result, organizations deploying lidar-based systems face challenges related to high installation costs, inefficient sensor utilization, and difficulties in scaling deployments across different operational environments.

Therefore, in light of the foregoing discussion, there exists a need to overcome the aforementioned drawbacks.

### SUMMARY

The aim of the present disclosure is to provide an automated lidar sensors placement and optimization system, a method, and a computer program product to determine optimal number, positions, and orientations of lidar sensors to ensure maximum coverage of an operational environment, minimize blind spots, and reduce installation complexity.

The aim of the present disclosure is achieved by an automated lidar sensors placement and optimization system, a method, and a computer program product for lidar sensors placement and optimization as defined in the appended independent claims.

The embodiments of the present disclosure substantially enable improvements in the efficiency of lidar sensor deployment by eliminating the need for manual trial-and-error placement. The system ensures precise sensor positioning, reducing installation time, improving resource utilization, and optimizing sensor coverage. By utilizing computational models and optimization techniques, the disclosed system allows for rapid and scalable lidar sensor deployment in diverse operational environments.

Additional aspects, advantages, features, and objects of the present disclosure would be made apparent from the drawings and the detailed description of the illustrative embodiments constructed in conjunction with the appended claims that follow.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is a schematic illustration of an architecture of an automated lidar sensors placement and optimization system, in accordance with an embodiment of the present disclosure;
FIG. 2 is an illustration of an exemplary lidar sensor projecting laser pulses into a Field of View (FOV), in accordance with an embodiment of the present disclosure; and
FIG. 3 is an illustration of a flow chart of steps of a method for lidar sensors placement and optimization, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides an automated lidar sensors placement and optimization system comprising a processing unit configured to:
receive and analyze, using a three-dimensional model integration module, a three-dimensional site layout data to obtain environmental information of an operational environment;
calculate, using a lidar placement algorithm, optimal quantity, positions and orientations of lidar sensor, based on the three-dimensional site layout data and lidar sensor configurations, the lidar sensor configuration comprising at least one of: a field-of-view (FoV) of the lidar sensors, range specifications of the lidar sensors, luminance of the lidar sensors; and
generate, using an output generator module, a placement map, specifying precise coordinates of the operational environment for installation of lidar sensors and orientations for each lidar sensor to achieve comprehensive coverage of the operational environment.

In a second aspect, the present disclosure provides a method for placement and optimization of lidar sensors in an operational environment, the method comprising:
receiving and analyzing, using a three-dimensional model integration module, a three-dimensional site layout data to obtain environmental information of an operational environment;
calculating, using a lidar placement algorithm, optimal quantity, positions and orientations of lidar sensor, based on the three-dimensional site layout data and lidar sensor configurations, the lidar sensor configuration comprising at least one of: a field-of-view (FoV) of the lidar sensors, range specifications of the lidar sensors, luminance of the lidar sensors; and
generating, using an output generator module, a placement map, specifying precise coordinates of the operational environment for installation of lidar sensors and orientations for each lidar sensor to achieve comprehensive coverage of the operational environment.

In a third aspect, the present disclosure provides a computer program product comprising a non-transitory machine-readable data storage medium having stored thereon program instructions that, when executed by a processor, cause the processor to execute steps of a method for lidar sensors placement and optimization of lidar sensors in an operational environment.

The present disclosure provides the aforementioned automated lidar sensors placement and optimization system (referred as, the system, hereinafter) and the aforementioned method for lidar sensors placement and optimization. By automating the placement of the lidar sensors, the system eliminates a need for manual trail-and-error methods, reducing deployment time and efforts. Moreover, the lidar placement algorithm ensures that the lidar sensors are positioned and oriented to achieve comprehensive coverage of the operational environment while minimizing blind spots and redundancies. The optimization process reduces the number of sensors required, minimizing hardware and installation costs. Furthermore, the 3D model integration module is configured to analyze the obtained environmental information. Based on the analysis of the 3D model integration module extracts structural and spatial details of the operational environment that are relevant to deployment of the lidar sensors. These calculations are based on specific lidar sensor configurations, which include field-of-view (FoV), range specifications, and luminance characteristics.

The lidar placement algorithm ensures that the FoV of the lidar sensors contributes to a complete and unobstructed coverage of the operational environment, reducing blind spots while avoiding unnecessary lidar sensors overlapping. The use of three-dimensional site layout data and lidar sensor configurations ensures that the placement is highly accurate, aligning with the specific requirements of the environment. Furthermore, the output generator module provides a detailed placement map, simplifying the installation process for technicians and reducing the likelihood of errors. The system is implemented to eliminate manual trial-and-error approaches, leveraging precise 3D modeling and algorithmic analysis to achieve high-efficiency sensor deployment. The processing unit also ensures that lidar sensors are placed in orientations that maximize their effectiveness, preventing inefficiencies due to occlusions, misalignment, or underutilization.

In an embodiment, the automated lidar sensors placement and optimization system operates through the following sequential steps:
First, a three-dimensional site layout of the operational environment is imported into the system using the three-dimensional model integration module. The site layout may be in a standard architectural file format, such as DWG or OBJ, and includes features such as structural boundaries, operational zones, and obstacles.

Next, the lidar placement algorithm processes the imported site data along with user-defined sensor parameters, including field-of-view, range, and luminance. The algorithm evaluates candidate sensor locations based on visibility, overlap, and installation constraints, such as available cabling paths and mounting locations. It incorporates a penalty function to optimize for cabling lengths and shading obstructions and calculates the minimal number of lidar sensors required to fully cover a specified operational layer, typically, e.g., 1 meter above ground level.

Once optimized, the output generator module produces a placement map detailing the calculated coordinates and orientations for each lidar sensor. The placement map may also include suggested mounting heights, recommended sensor models, and estimated cable lengths.

Technicians then install the sensors at the designated coordinates based on the placement map. If installation accuracy is critical, optional tools such as ground target markers and laser-equipped precision jigs may be employed to verify sensor alignment and orientation during installation.

After the physical installation, the system validates the network by confirming that the lidar sensors meet the predefined coverage specification threshold, ensuring that the full operational area is monitored without blind spots or overlaps.

In one example scenario, the system is deployed in a fenced logistical yard used for vehicle and pallet operations. The yard layout is first digitized in a DWG-format file that includes external fencing, access gates, storage zones, and traffic aisles. This 3D site layout is imported into the system's three-dimensional model integration module. The lidar placement algorithm is configured with the specifications of a sensor model having a horizontal field-of-view of 120 degrees, a vertical field-of-view of 20 degrees, a range of 25 meters, and high environmental luminance tolerance. The system evaluates potential sensor positions along fence lines and on top of control cabins. The algorithm considers obstruction factors such as stacked pallets and container walls, as well as the central location of the yard's network hub to minimize cabling distances. The system determines that six lidar sensors are sufficient to achieve complete coverage of the yard at a height of 1.2 meters above ground. The output generator module provides a placement map with precise Cartesian coordinates and recommended orientation angles for each sensor. During installation, technicians use marked ground targets and a laser jig to align pedestal-mounted sensors at the computed positions. After deployment, the processing unit validates each sensor's effective coverage against the defined visibility criteria. The final configuration ensures seamless spatial coverage of high-traffic lanes, storage areas, and gate entries, with optimized installation time and minimal cable infrastructure.

In an embodiment, the lidar placement algorithm employs a weighted optimization model wherein an objective function aims to maximize spatial coverage while minimizing penalty scores. The algorithm evaluates discrete placement options based on 3D site data, applying constraints derived from sensor configurations (FoV, range, luminance). The optimization process uses a grid-based scoring system with penalties for excessive overlap, shading, or distance from central nodes. For example, it may employ techniques such as simulated annealing or greedy selection to iteratively converge toward the most efficient layout. The output comprises placement coordinates and orientation vectors ensuring minimum blind spots and reduced sensor count, enabling cost-effective and high-coverage deployments.

Throughout the present disclosure, the term *"lidar sensor"* refers to a light ranging and detection and/or a remote sensing technology that uses laser pulses to scan and capture the operational environment. Examples of the given lidar sensors may include, but are not limited to, radar sensors, ultrasonic sensors, inertial measurement unit sensors, optical sensors and the like. It will be appreciated that the lidar sensors does not rely on ambient light, making the lidar sensors effective in various environmental conditions. The lidar sensors may be installed in an infrastructure within the operational environment for examples such as walls, ceilings, boundaries, and similar. Optionally, one or more scaffolding structures may be used for mounting the lidar sensors at sufficient height in outdoor and/or indoor, when there is no suitable equipment or place within the operational environment for deploying. Optionally, layout (such as height, placement, and overall number) of the lidar sensors may be dependent on multiple factors such as an area size of the operational area, other moving object size, minimum detectable object size requirement, redundancy requirements, or similar. Optionally, the lidar sensors uses a gigabit ethernet and 230V(volt) mains power for communicating with a communication network. It will be appreciated that the arrangement of the lidar sensors to cover an entirety of the operational area.

Throughout the present disclosure, the term *"processing unit"* refers to a computational processing unit that is communicably coupled to the lidar sensors installed in the operational environment. Notably, the processing unit is responsible to receiving, analyzing, processing and transmitting data received from the lidar sensors through the communication network. Examples of the processing unit may include, but are not limited to, a microprocessor, a microcontroller, a complex instruction set computing (CISC) microprocessor, a reduced instruction set computing (RISC) microprocessor, a very long instruction word (VLIW) microprocessor, or any other type of processing circuit. In this regard, the term *"communication network"* refers to a wired or a wireless data transmission network that enables seamless communication between given processing unit and the lidar sensors. In this regard, the processing unit is coupled to the lidar sensors, respectively, through a wired network (e.g., an ethernet, a fiber optic connection, an industrial fieldbus protocol and the like), a wireless network (e.g., Wi-Fi, 4G/5G/6G, Li-Fi, mmWave, Radio Frequency communication protocol and the like) and a hybrid network (a combination of wired and wireless technologies).

Throughout the present disclosure, the term *"three-dimensional site layout data"* refers to a digital representation of the operational environment representing a three-dimensional (3D) layout of the operational environment. The site layout data may include spatial, structural, and environmental attributes necessary for optimizing lidar sensor placement. The site layout data is a fundamental input used by the automated lidar sensors placement and optimization system to determine optimal sensor positions, coverage areas, and potential obstructions. The site layout data may be derived from three-dimensional (3D) models, architectural blueprints, computer-aided design (CAD) files, or scanned environmental data, ensuring an accurate and comprehensive representation of the operational environment. For instance, in a logistics warehouse, the site layout data may include aisle dimensions, storage rack placements, docking areas, and conveyor belt locations. In an industrial facility, it may define machine placements, workstations, safety zones, and overhead structures. In an outdoor depot, the data may incorporate terrain topology, roadways, parking zones, and loading/unloading bays and the likes.

The 3D site layout data includes key elements such as, physical boundaries, e.g., walls, partitions, columns, and other static structures that influence coverage of the lidar sensors. The 3D site layout data further includes obstacles and shaded areas (objects that may create blind spots or interfere with the field of view of the lidar sensors, such as large machinery, shelving units, or parked vehicles). Furthermore, the site layout data may include height and elevation information. Furthermore, the site layout data may also include cable routing paths, information related to reflective surfaces and the like.

Throughout the present disclosure the term *"environmental information"* refers to an information associated with the operational environment that influences placement, optimization, and functionality of the lidar sensors. The operational information may include real-time environmental conditions, movement patterns, obstacles, coverage zones and functional parameters essential for ensuring optimal sensor coverage and accurate spatial monitoring.

Moreover, the environmental information may include movement patterns (a frequency and distribution of moving entities such as vehicles, machinery, or personnel), environmental conditions like lighting variations, temperature fluctuations, humidity levels, real-time changes (including dynamic modifications in the operational environment, such as temporary obstructions, machinery relocation, or construction work), and the like.

The environmental information may be derived from inputs from the lidar sensors, historical data, real-time analytics. For instance, in a logistics warehouse, the environmental information may include frequent traffic zones, peak activity hours, and movement paths of forklifts or personnel. In a manufacturing facility, it may define operating zones of robotic arms, assembly line motion patterns, and hazardous areas requiring continuous monitoring.

Throughout the present disclosure, the term *"operational environment"* refers to a physical space or area or a controlled real-world environment in which the lidar sensors are deployed. The operational environment encompasses both indoor and outdoor settings, including but not limited to industrial facilities, warehouses, logistics hubs, manufacturing plants, parking lots, airports, and security surveillance zones. It serves as the defined region where the system functions to ensure optimal sensor coverage. The operational environment includes various structural and functional elements, including walls, machinery, shelves, pathways, access points, and moving objects such as vehicles or personnel. Depending on an application, the operational environment may have fixed features (e.g., walls, permanent equipment installations) or dynamic elements (e.g., forklifts, conveyor belts, storage racks, or changing layouts). For instance, in a warehouse setting, the operational environment includes aisles, pallet racks, loading docks, and worker movement zones, requiring strategic lidar placement to maintain clear visibility in high-traffic areas.

Throughout the present disclosure, the term *"three-dimensional model integration module"* refers to a component of the system that is configured to import and process the three-dimensional site layout data. The three-dimensional model integration module is designed to analyze geometry and features of the operational environment by identifying critical elements such as boundaries, obstacles, and operational zones. The three-dimensional model integration module is technically related to the three-dimensional site layout data, as it serves as the processing unit that receives and interprets the data. The process of receiving and analyzing the three-dimensional site layout data involves extracting relevant geometric and spatial information, such as the locations of boundaries, obstacles, and coverage zones. The relationship between the three-dimensional model integration module and the three-dimensional site layout data is that the three-dimensional model integration module is the component responsible for receiving and analyzing the three-dimensional site layout data. It will be appreciated that the process of receiving and analyzing three-dimensional site layout data automates and optimizes the deployment of lidar sensors in complex environments. By using the three-dimensional model integration module, the system ensures accurate and efficient extraction of environmental information, for achieving full coverage of the operational environment while minimizing the number of sensors and associated costs. This automation reduces human intervention and improves the scalability of the system for various industrial applications.

Throughout the present disclosure, the term *"lidar placement algorithm"* refers to a computational process or a method that is configured to determine the optimal deployment of lidar sensors within the operational environment. The lidar placement algorithm processes the three-dimensional site layout data and the lidar sensor configurations to calculate the optimal quantity, positions, and orientations of the lidar sensors. The lidar placement algorithm uses the spatial and geometric information of the operational environment as input. The lidar placement algorithm incorporates technical specifications of the lidar sensors, such as the field-of-view (FoV), range specifications, and luminance, to ensure accurate and efficient placement of the lidar sensors in the operational environment. Throughout the present disclosure, the term *"optimal quantity"* refers to a calculated number of lidar sensors that is required to achieve full coverage of the operational environment. The optimal quantity ensures that the number of lidar sensors is minimized while maintaining complete coverage of the operational environment. The positions of the lidar sensors define exact coordinates where the lidar sensors are to be installed, and the orientations of the lidar sensors specify angles at which the lidar sensors are to be aligned to maximize their field-of-view and range. The optimal quantity, positions, and orientations of the lidar sensors are determined by the lidar placement algorithm based on the three-dimensional site layout data and the lidar sensor configurations. These parameters are interrelated, as the positions and orientations of the lidar sensors directly influence the quantity of lidar sensors required to achieve the desired coverage. Throughout the present disclosure, the term *"lidar sensor configuration"* refers to a technical specification and an operational parameter of the lidar sensors that are used as input for the lidar placement algorithm. The lidar sensor configurations include at least one of the field-of-view (FoV) of the lidar sensors, the range specifications of the lidar sensors, and the luminance of the lidar sensors. The lidar sensor configurations define capabilities and limitations of the lidar sensors, which the lidar placement algorithm considers when calculating the optimal quantity, positions, and orientations of the lidar sensors.

Throughout the present disclosure, the term *"field of view"* refers to an angular range, both horizontal and vertical, within which the lidar sensors can detect objects. The field-of-view (FoV) of the lidar sensors is a parameter in the lidar sensor configurations, as it determines the coverage area of each lidar sensor. Additionally, the operational environment influences the lidar sensor's field of view (FoV), range, and resolution requirements based on its spatial characteristics. For example, a large open space may require long-range lidar sensors with a wide FoV, whereas a narrow corridor or enclosed workspace may necessitate high-resolution, short-range lidar sensors for detailed object detection. Moreover, the operational environment also includes designated sensor mounting locations, such as ceilings, walls, poles, or ground-based installations, depending on the desired coverage area. By defining the operational environment, the system enables a structured approach to sensor placement, optimization, and calibration, ensuring that the lidar-based monitoring framework adapts to the specific spatial and functional needs of different industries and applications. The operational environment is defined by physical boundaries and is equipped with necessary infrastructure to support for automated lidar sensors placement and optimization. In this regard, the lidar sensors are arranged in a manner that an entirety of the operational environment is covered.

Throughout the present disclosure, the term *"range specification"* refers to a maximum effective distance within which the lidar sensors can detect the objects. The range specifications of the lidar sensors define the operational limits of the lidar sensors. The range specifications of the lidar sensors are used by the lidar placement algorithm to calculate the optimal positions of the lidar sensors to ensure that all areas of the operational environment are within the detection range of the lidar sensors. Throughout the present disclosure, the term *"luminance"* refers to an intensity and a visibility characteristic of the lidar sensors, which influence their ability to detect the objects under varying environmental conditions. The luminance of the lidar sensors is a parameter in the lidar sensor configurations that affects the performance of the lidar sensors in terms of accuracy and reliability.

It will be appreciated that the calculation of the optimal quantity, the positions, and the orientations of lidar sensors ensure efficient and cost-effective deployment of lidar sensor networks in complex environments. Without such optimization, manual or trial-and-error methods may result in redundant sensor placements, blind spots, or excessive hardware costs. By leveraging the lidar placement algorithm, the system ensures that the lidar sensors are deployed in a manner that maximizes coverage, minimizes overlapping, and reduces the number of sensors required. The lidar placement algorithm processes the three-dimensional site layout data, which contains spatial and geometric details of the operational environment, such as boundaries, obstacles, and coverage zones. The algorithm also considers the lidar sensor configurations. Using this input, the lidar placement algorithm performs mathematical optimization to calculate the optimal quantity of the lidar sensors required to achieve full coverage of the operational environment, the positions of the lidar sensors to ensure that all critical areas are covered without redundancy or blind spots, orientations of the lidar sensors to maximize their field-of-view and range while minimizing overlap.

Throughout the present disclosure, the term *"placement map*" refers to a spatial representation generated by the processing unit that specifies the precise locations and orientations of of the lidar sensors within the operational environment. For example, the placement map provides a visual or digital guide indicating sensor locations to ensure maximum coverage while minimizing blind spots, overlap, and installation inefficiencies. The placement map may be generated based on the three-dimensional site layout data, the lidar sensor specifications, and the placement algorithm's optimization criteria, ensuring comprehensive coverage while minimizing redundancy and obstructions. The placement map serves as a reference for installation teams, guiding them to position each lidar sensor accurately to achieve maximum efficiency. It will be appreciated that the placement map ensures that the lidar sensors are installed accurately and efficiently, reducing the likelihood of errors, minimizing installation time, and ensuring that the operational environment is fully covered. Throughout the present disclosure, the term *"output generator module"* refers to a system component that is configured to produce the placement map that provides detailed instructions for the installation of lidar sensors in the operational environment. The output generator module processes the results of the lidar placement algorithm, which calculates the optimal quantity, positions, and orientations of the lidar sensors. The precise coordinates defines the exact spatial locations within the operational environment where the lidar sensors are to be installed. These precise coordinates are included in the placement map generated by the output generator module. The orientations of each lidar sensor defines the angular alignments of the lidar sensors required to maximize their field-of-view and ensure comprehensive coverage of the operational environment.

Optionally, the processing unit is further configured to generate installation instructions for:
selection of at least one lidar sensor from amongst lidar sensors of distinct lidar sensor configurations, wherein each lidar sensor is configured to monitor a corresponding subarea of the operational environment, and
guiding installation of the at least one lidar sensor based on the placement map.

In this regard, the term *"installation instructions"* refers to a set of predefined guidelines generated by the processing unit to assist in the correct placement and deployment of lidar sensors within the operational environment. The installation instructions ensure that lidar sensors are selected and installed in accordance with the site-specific conditions, avoiding suboptimal placement that may lead to blind spots or unnecessary redundancy. The processing unit optimally selects a suitable lidar sensor based on coverage needs, environmental constraints, and required resolution. For example, in a warehouse, a lidar sensor with a long-range and narrow field-of-view (FoV) may be positioned at high elevations to cover wide open spaces, while a short-range, wide-FoV sensor may be placed at entry points for detailed monitoring.

In this regard, the term *"distinct lidar sensor configurations"* refers to different technical specifications and operational parameters such as a field-of-view (FoV), a range, and a luminance, which impact a performance and suitability of the lidar sensors for a given subarea of the operational environment. Each lidar sensor is strategically chosen to monitor a corresponding subarea, ensuring that the entire operational area is comprehensively covered with minimal sensor deployment. Herein, the term *"corresponding subarea"* refers to a distinct section within the operational environment that is designated for monitoring by a specific lidar sensor. The corresponding subarea is determined based on the spatial and geometric characteristics of the operational environment such as the FoV, the range, and a resolution of the lidar sensors, as well as physical constraints within the operational environment, such as walls, equipments, or other obstructions. The division of the operational environment into subareas enables efficient allocation of lidar sensors, ensuring comprehensive coverage while minimizing redundancy. Each subarea may vary in size and shape depending on the deployment requirements and the characteristics of the lidar sensors used. The at least one lidar sensor detect and tracks objects or the activities within the corresponding subarea of the operational environment. The monitoring is achieved by deploying the at least one lidar sensor in a position and orientation that aligns with the requirements of the corresponding subarea, as specified in the placement map. The placement map provides detailed instructions, including the precise coordinates and orientations required to position the at least one lidar sensor in a manner that ensures effective monitoring of the corresponding subarea. The placement map serves as the primary reference for guiding the installation process. It will be appreciated that the selection of lidar sensors based on their configurations optimizes placement efficiency and ensures that no critical blind spots remain. Additionally, guiding installation based on the placement map enables technicians to precisely position the sensors according to the system's optimized plan, reducing errors during deployment.

A technical effect of the aforementioned feature is an improvement in the accuracy and reliability of sensor deployment, ensuring that the selected lidar sensor is appropriately positioned to achieve optimal coverage while minimizing errors in installation. Additionally, it reduces the likelihood of over-deployment or under-utilization of lidar sensors, minimizing hardware costs and ensuring comprehensive coverage of the operational environment.

Optionally, the processing unit is further configured to employ at least one ground target and/or a precision jig for optimizing installation of the at least one lidar sensor of the lidar sensors. In this regard, the term *"ground target"* refers to a predefined marker or reference point that is placed within the operational environment to aid in aligning and calibrating the lidar sensors accurately during the installation. The ground target is placed at specific locations within the operational environment, as determined by the placement map, to serve as a reference point for aligning the at least one lidar sensor. It will be appreciated that the ground target provides a visual or physical guide to ensure that the at least one lidar sensor is installed at the correct location and orientation. Further, the term *"precision jig"* refers to a specialized mounting tool that ensures accurate positioning of the at least one lidar sensor during installation. For example, the precision jig may be a laser or camera-equipped tool designed to aid in aligning the lidar sensor to its optimal orientation. It will be appreciated that the use of the ground target and/or the precision jig allows the system to perform systematic calibration, reducing a likelihood of sensor misalignment. A technical effect of the aforementioned feature is a reduction in installation errors and inconsistencies, thereby improving the accuracy of lidar-based environmental mapping and minimizing the need for post-installation adjustments.

Optionally, the processing unit is further configured to validate an optimal installation of a given lidar sensor of the lidar sensors when a coverage specification of the given lidar sensor is equal to or greater than a pre-defined coverage specification threshold. In this regard, the term *"coverage specification"* refers to operational parameters of the given lidar sensor, including the field-of-view, the range, the luminance, the resolution, and the like. Notably, the coverage specification is the measurable performance characteristics of the given lidar sensor in terms of its ability to monitor a specific area of the operational environment. The positioning and orientation of the given lidar sensor directly influence its coverage specification. Herein, the term "*pre-defined coverage specification threshold"* refers to a predetermined performance benchmark that defines the minimum acceptable coverage specification for the given lidar sensor. The pre-defined coverage specification threshold ensures that the given lidar sensor meets a minimum required level of visibility and accuracy. The predefined coverage specification threshold may be preset value assigned to the given lidar sensor at a time of manufacturing of the lidar sensors. The processing unit verifies whether the installed lidar sensors meets or exceeds the predefined threshold for coverage before confirming its deployment. If the coverage specification is equal to or greater than the pre-defined coverage specification threshold, the installation is deemed optimal. Based on the verification, the processing unit prevents situations where the given lidar sensor of the lidar sensors is installed in a manner that leads to incomplete or inefficient monitoring of the operational environment. It will be appreciated that this feature ensures that each sensor functions as intended before finalizing the deployment. A technical effect of the aforementioned feature is to ensure that each lidar sensor operates within its intended performance range, minimizing data loss and ensuring comprehensive coverage of the operational environment.

Optionally, the processing unit is configured to generate a notification when the optimal installation of a given lidar sensor is validated. In this regard, the term *"notification"* refers to a system-generated message or an alert that informs the installation team or an operator that a particular lidar sensor has been successfully installed in compliance with its coverage specification. For example, the notification may be a message or a call or a popup text that serves as a confirmation that the given lidar sensor has been correctly installed according to the predefined coverage specification threshold. The notification can be visual, auditory, or transmitted to a remote monitoring system. The notification may be communicated to the operator via a graphical user interface (GUI), an alert in an installation application, a system log entry and the like. In this regard, the given lidar sensor is a lidar sensor that is being installed and validated within the operational environment. It will be appreciated that the aforementioned feature enhances deployment efficiency of the lidar sensors installation by providing immediate feedback to technicians, allowing them to proceed confidently with subsequent installations. A technical effect of the aforementioned feature is an improvement in operational efficiency, as it allows for real-time validation and confirmation of lidar sensor placement, reducing the need for manual verification and post-installation corrections.

Optionally, the operational environment is at a specific height of at least 1 meter. In this regard, the term *"specific height"* refers to a predetermined vertical level within the operational environment at which lidar sensors are configured to perform scanning operations. Specifically, the lidar sensors are configured to scan the operational environment at a minimum height of 1 meter (m) above the ground surface or floor level.

In this regard, the specific height may be in the range of 1m, 2m, 3m, 4m or 5m up to 2m, 3m, 4m, 5m or 6m. This ensures that the lidar sensors avoid interference from ground-level obstacles such as equipment, furniture, or personnel movement, thereby enhancing data accuracy. Additionally, maintaining a scanning height of at least 1 meter allows the system to capture a clearer and more comprehensive representation of the operational environment, facilitating improved object detection, spatial mapping, and environmental monitoring. It will be appreciated that ensuring lidar sensor coverage at a defined height enhances consistency in detection and tracking. A technical effect of the aforementioned feature is the enhancement of performance of the lidar sensors by ensuring an optimal scanning elevation that reduces noise and obstructions caused by objects in the operational area while maximizing coverage.

Optionally, the processing unit is configured to determine cabling routes and/or cable lengths for installation of lidar sensors based on the operational environment and the placement plan. In this regard, the term *"cabling route"* refers to a path in the operational environment through which power and data transmission cables are laid out to connect the lidar sensors with the processing unit or the communication network. The cabling route is determined by the processing unit based on the spatial and geometric characteristics of the operational environment and the positions of the lidar sensors as specified in the placement plan. The cable length refers to the measured distance of the cables required to connect the lidar sensors to a central processing unit, power source, and the communication network. Further, the processing unit calculates the optimal cable lengths to minimize material usage and installation complexity. Herein, determining cabling routes involves mapping out the most efficient paths for the lidar sensors connectivity, ensuring minimal cable length while maintaining accessibility and structural integrity. This feature accounts for obstacles, power supply locations, and network connections to optimize cable management. It will be appreciated that pre-planning cabling reduces installation complexity and ensures seamless connectivity between sensors and the processing unit. A technical effect of the aforementioned feature is a reduction in installation costs and cable-related inefficiencies, ensuring reliable power and data connectivity without excessive wiring and improving maintenance efficiency by providing well-organized cable layouts.

Optionally, the processing unit is configured to:
apply a penalty function to the lidar placement algorithm to determine distances between a central connection point and at least one lidar sensor of the lidar sensors; and
associate a penalty score corresponding to each distance determined between the central connection point and the at least one sensor, wherein higher penalty score correspond to longer cabling distance between the central connection point and the at least one lidar sensor.

In this regard, the term *"penalty function"* refers to a mathematical constraint applied by the processing unit to the lidar placement algorithm to evaluate and optimize lidar sensor distribution while minimizing long cable runs. For instance, if a lidar sensor is positioned too far from the central connection point, the system assigns a higher penalty score, discouraging such placements to reduce installation costs and latency in data transmission. The term *"central connection point"* refers to a designated location within the operational environment where the lidar sensors are connected to the processing unit, the power source, or the communication network. The central connection point serves as the reference point for determining the cabling distances to each lidar sensor. The distances between the central connection point and the lidar sensors are used as input for applying the penalty function. Herein the term *"penalty score"* refers to a numerical value assigned by the penalty function to each cabling distance between the central connection point and the lidar sensor. The penalty score is directly proportional to the cabling distance, with longer distances resulting in higher penalty scores. The processing unit uses penalty scores as a cost function component within its optimization algorithm, ensuring that lidar sensor is positioned in a way that maximizes coverage while minimizing inefficiencies, obstructions, and installation complexities.

Moreover, the penalty score is applied to the lidar sensor placements that involve excessive wiring efforts. For example, a placement that requires longer cabling to mount the lidar sensors in the operational environment may receive a higher penalty score. By incorporating the penalty score, the system effectively balances optimal coverage of the operational area while minimizing the cabling cost. This ensures that the lidar sensors are placed in high-visibility, low-obstruction locations, reducing the longer cabling distance while maximizing operational effectiveness.

Additionally, the penalty function accounts for practical deployment considerations. For example, in a large industrial facility, placing the lidar sensors too far from the power supply and data transmission hubs would result in excessive cable usage, increased signal loss, and complex routing. The processing unit balances placement efficiency with practical limitations to ensure optimal lidar sensor performance while reducing deployment overhead. It will be appreciated that the aforementioned feature ensures an optimal balance between lidar sensor placement and infrastructure constraints, reducing unnecessary cabling costs while maintaining full operational coverage

A technical effect of the aforementioned feature is an optimization of sensor layout, reducing infrastructure costs, improving deployment efficiency, and ensuring reliable connectivity between the lidar sensor and the central connection point.

Optionally, the penalty function comprises a shading penalty function to account for objects in the FoV of the lidar sensors, and wherein the shading penalty function is configured to:
identify at least one shaded area within the operational environment based on the three-dimensional site layout data and the lidar sensor configurations; and
assign a penalty score to each lidar sensor placement associated with reduced visibility due to shading, to optimize the lidar sensor placement.

In this regard, the term *"shading penalty function"* refers to a component of the penalty function that is configured to account for the impact of objects within the field of view (FoV) of the lidar sensors that obstruct or reduce visibility. The shading penalty function systematically evaluates how environmental structures, objects, or obstructions affect visibility of the lidar sensors. For example, in a logistics yard, large shipping containers, parked vehicles, or cranes may obstruct the direct line of sight of a lidar sensor, leading to shadowed areas where scanning effectiveness is diminished. Similarly, in a manufacturing facility, overhead beams, robotic arms, or stacked inventory can create dynamic occlusions that interfere with accurate sensing. By assigning the penalty score, the processing unit ensures that the lidar sensors are positioned to minimize visibility loss. For instance, a lidar sensor placed behind a storage rack in a warehouse would receive a high penalty score due to excessive occlusion, whereas a placement at aisle's intersection with an unobstructed view may receive a low penalty score, making it a preferred choice for installation of the lidar sensors.

Herein, the penalty score is calculated based on shading, which accounts for visibility reduction due to obstructions in the FoV of lidar sensors. For instance, if a lidar sensor is placed near a pillar or shelving unit, its FoV may be significantly blocked, resulting in a higher penalty score. Another important factor is the penalty score may be assigned based on the occlusion, which evaluates how much of the sensor's range is blocked by static or dynamic objects. The lidar sensors placed near a stack of crates in a warehouse or close to moving forklifts may experience occlusion, leading to an increase in the penalty score.

Additionally, the processing unit ensures that the lidar sensors are not placed too close to each other, preventing overlapping coverage and potential interference. For example, if two sensors have excessive FoV overlap, the system assigns a high penalty score to one of them to encourage better distribution.

A technical effect of the aforementioned feature is an improvement in the lidar sensor placement accuracy, reducing blind spots, enhancing environmental coverage, and ensuring that scanning performance is not compromised due to physical obstructions within the operational environment.

Optionally, the three-dimensional model integration module is compatible with standard architectural and engineering file formats, including DWG and OBJ. in this regard, the standard architectural and engineering file formats refer to widely used digital file formats that store and represent three-dimensional models, layouts, and designs of operational environment. The aforementioned file formats are commonly used in architectural, engineering, and construction workflows to define the spatial and geometric characteristics of the operational environment. The standard architectural and engineering file formats are compatible with the three-dimensional model integration module, enabling the module to import and process data from these formats for further analysis. In this regard, the DWG and the OBJ formats are widely used for 3D site layouts, containing geometric and structural information essential for accurate lidar sensor placement. The DWG file format is commonly used in computer-aided design (CAD) applications to represent architectural and engineering layouts, including detailed information about boundaries, obstacles, and operational zones. The DWG file format is compatible with the three-dimensional model integration module, allowing the module to import and analyze data stored in this format. The OBJ file format refers to a standard file format used for representing three-dimensional geometry, including the positions of vertices, edges, and faces that define the shape of an object or environment. The OBJ file format is widely used in architectural and engineering applications to store and exchange three-dimensional models. Compatibility with these formats allows seamless integration with existing architectural and engineering designs without requiring manual conversions. It will be appreciated that enabling direct import of industry-standard files streamlines the lidar deployment process, reducing time and effort in preparing site models. Additionally, supporting standard formats improves adoption rates by ensuring that users can work with familiar file types without requiring proprietary conversion tools.

For example, in an airport baggage handling area, an imported DWG file containing structural layouts, conveyor belt positions, and equipment zones enables the system to precisely define operational subareas for sensor placement. Similarly, an OBJ file representing autonomous guided vehicles (AGVs) and robotic pickers in a smart warehouse may be used to simulate their impact on the lidar sensors coverage before deployment.

A technical effect of the aforementioned feature is the enhancement of lidar sensor planning accuracy, as the system can leverage precise site models rather than relying on manually reconstructed layouts, ensuring efficient lidar deployment while reducing design errors and rework efforts. Additionally, by ensuring compatibility with standard architectural and engineering file formats, the three-dimensional model integration module can seamlessly import and process data from widely used design abilities and saves time during data preparation phase.

Optionally, the processing unit is further configured to generate an operational occupancy grid, the operational occupancy grid comprising a representation of the operational environment divided into discrete cells, each cell indicating whether it is occupied or free for a given lidar sensor placement.

In this regard, the term *"operational occupancy grid"* refers to a structured grid-based data representation that maps a physical availability of a space within the operational environment. Each cell in the operational occupancy grid indicates whether it is occupied by an obstacle or free for the given lidar sensor placement. Herein, the term *"discrete cell"* refers to individual units or divisions within the operational occupancy grid that collectively represent the operational environment. Each discrete cell is assigned a value indicating whether it is occupied by an obstacle or free for a given lidar sensor placement. The term *"given lidar sensor placement"* refers to a specific position and orientation of a lidar sensor within the operational environment as determined by the lidar placement algorithm. The system utilizes the operational occupancy grid to determine viable lidar sensor placement locations by distinguishing between occupied regions (where the objects, the structures, or the equipment are present) and free regions (open spaces available for lidar deployment). For example, in an automated distribution center, the processing unit generates an occupancy grid to classify areas into occupied cells representing permanent structures like conveyor belts, pallet racks, robotic stations, and walls, and free cells representing open pathways, intersections, ceiling-mounted sensor slots and the like. By analyzing the operational occupancy grid, the system avoids placing sensors in restricted or blocked locations, ensuring optimal coverage without interference from obstacles in the occupied regions in the operational environment.

A technical effect of the aforementioned feature is an improvement in lidar sensor placement efficiency, ensuring that the lidar sensors are installed in viable, unobstructed locations or free regions, minimizing interference, and maximizing environmental monitoring accuracy.

Optionally, the processing unit is further configured to employ a process flow module to dynamically update the operational occupancy grid based on real-time environmental changes or operational requirements.

In this regard, the term *"process flow module"* refers to a computational unit within the processing unit that continuously monitors, processes, and updates the operational occupancy grid in response to real-time environmental changes. The process flow module monitors real-time environmental changes or operational requirements and modifies the operational occupancy grid accordingly to reflect the updated state of the operational environment. The processing unit utilizes the process flow module to adapt to the real-time environmental changes, for example, dynamic changes caused by a moving or dynamic object, ensuring that lidar sensor placement remains optimal even as site conditions change.

The dynamic update may include changes to the status of discrete cells, such as marking previously free cells as occupied due to the presence of new obstacles or marking previously occupied cells as free when obstacles are removed. For example, in a container shipping terminal, the processing unit may employ the process flow module to update the operational occupancy grid as cargo containers are loaded or unloaded, altering available lidar sensor placement areas. Similarly, in a warehouse with mobile shelving units, the process flow module can detect layout adjustments and dynamically update free and occupied cells, ensuring that lidar sensors continue to provide optimal coverage despite operational changes.

A technical effect of the aforementioned feature is an enhanced adaptability of lidar sensor placement, allowing real-time adjustments to maintain optimal visibility, prevent scanning obstructions, and ensure continuous monitoring efficiency in dynamic environments. Additionally, it reduces the likelihood of errors in lidar sensor placement or operation caused by outdated or inaccurate environmental data.

Optionally, the lidar placement algorithm incorporates a surface reflection function to enhance visibility, and wherein the surface reflection function is configured to:
analyze reflective surfaces within the operational environment to determine an impact thereof on the lidar sensor's performance; and
optimize the lidar sensor placement to leverage reflections for increased visibility in areas with limited direct line-of-sight coverage.

In this regard, the term *"surface reflection function"* refers to a component of the lidar placement algorithm that assesses how lidar laser signals interact with reflective materials such as glass, metal surfaces, or polished floors in the operational environment. By leveraging reflections from the reflective surfaces, the system improves detection accuracy in occluded regions that have limited direct line-of-sight coverage with the lidar sensors where direct scanning might be obstructed. In this regard, the impact refers to an effect that the reflective surfaces within the operational environment have on the performance of the lidar sensors. The impact includes both positive effects, such as increased visibility in areas with limited direct line-of-sight coverage, and potential negative effects, such as signal distortion or interference. Herein, the term *"direct line-of-sight coverage"* refers to an unobstructed visibility between the lidar sensors and region the lidar sensors are intended to scan within the operational environment. The direct line-of-sight coverage is an ability of the lidar sensor to detect objects or areas within the operational environment without any obstructions between the lidar sensor and the region within the operational environment. For example, in an automotive assembly plant, a lidar sensor positioned near a stainless-steel assembly line might receive indirect reflections that help detect objects in areas where direct visibility is blocked by machinery. Similarly, in a shopping mall security system, reflections from large glass panels can extend the scanning reach of lidar sensors placed at entrances, improving motion tracking in concealed areas. A technical effect of the aforementioned feature is an enhancement of the coverage of the lidar sensors and visibility by utilizing the environmental reflections to compensate for occlusions, ensuring a comprehensive scanning capability in the complex environments. It reduces blind spots and improves the performance of the lidar sensors in areas with limited direct line-of-sight coverage.

The present disclosure also relates to the method as described above. Various embodiments and variants disclosed above, with respect to the aforementioned automated lidar sensors placement and optimization system, apply mutatis mutandis to the method.

Optionally, the method further comprises generating installation instructions for:
selection of at least one lidar sensor from amongst lidar sensors of distinct lidar sensors configurations; and
guiding installation of the at least one lidar sensor based on the placement map.

Optionally, the method further comprises:
validating an optimal installation of a given lidar sensor of the lidar sensors when a coverage specification of the given lidar sensor is equal to or greater than a pre-defined coverage specification threshold; and
generating a notification when the optimal installation of the given lidar sensor is validated.

Optionally, the method further comprises at least one of:
employing at least one ground target and/or a precision jig for optimizing installation of the at least one lidar sensor of the lidar sensors; and
determining cabling routes and/or cable lengths for installation of lidar sensors, based on the operational environment and the placement plan.

Optionally, the method further comprises:
applying a penalty function to the lidar placement algorithm to determine distances between a central connection point and the at least one sensor of the lidar sensors; and
associating a penalty score corresponding to each distance determined between the central connection point and the at least one sensor, wherein higher penalty score corresponds to longer cabling distance between the central connection point and the at least one lidar sensor.

Optionally, the penalty function comprises a shading penalty function to account for objects in the FoV of the lidar sensors, and wherein the shading penalty function is configured to:
identify at least one shaded area within the operational environment based on the three-dimensional site layout data and the lidar sensor configurations; and
assign a penalty score to each lidar sensor placement associated with reduced visibility due to shading, to optimize the lidar sensor placement.

Optionally, the method further comprises generating an operational occupancy grid, the operational occupancy grid comprising a representation of the operational environment divided into discrete cells, each cell indicating whether it is occupied or free for a given lidar sensor placement.

Optionally, the method further comprises employing a process flow module to dynamically update the operational occupancy grid based on real-time environmental changes or operational requirements.

Optionally, the lidar placement algorithm incorporates a surface reflection function to enhance visibility, and wherein the surface reflection function is configured to:
analyze reflective surfaces within the operational environment to determine an impact thereof on the lidar sensor's performance; and
optimize the lidar sensor placement to leverage reflections for increased visibility in areas with limited direct line-of-sight coverage.

The present disclosure also relates to the computer program product as described above. Various embodiments and variants disclosed above, with respect to the aforementioned automated lidar sensors placement and optimization system and the aforementioned method, apply mutatis mutandis to the computer program product.

### DETAILED DESCRIPTION OF THE DRAWINGS

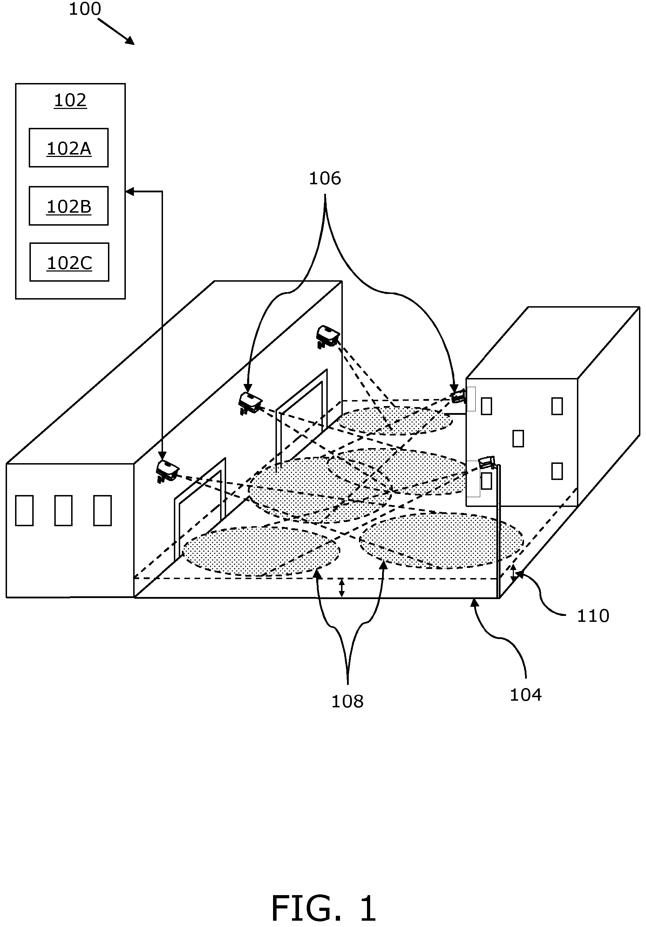

Referring to FIG. 1, illustrated is a schematic illustration of an architecture of an automated lidar sensors placement and optimization system **100,** in accordance with an example of present disclosure. As shown in the FIG. 1, the automated lidar sensors placement and optimization system **100** (referred as system **100,** hereinafter) comprises a processing unit **102** configured to execute the lidar sensor placement algorithm based on site layout data, operational requirements, and optimization constraints. The processing unit **102** comprises a three-dimensional (3D) model integration module **102A** configured to receive and analyze a 3D site layout data to obtain environmental information of an operational environment **104.**

Moreover, the processing unit **102** also comprises a lidar placement algorithm **102B** configured to calculate optimal quantity of the lidar sensors **106.** Further, the processing unit **102** configured to calculate position and the orientation of the lidar sensors **106** based on the 3D site layout data, ensuring comprehensive coverage of the operational environment **104** while minimizing sensor count and installation costs.

In this regard, the operational environment **104** refers to the area or region where the lidar sensors **106** are to be deployed for monitoring, tracking, and spatial mapping. The operational environment **104** may include both indoor and outdoor settings, such as logistical yards, industrial facilities, warehouses, and transportation hubs. The processing unit **102** utilizes the three-dimensional site layout data corresponding to the operational environment **104** to determine suitable sensor locations that account for obstacles, shading, and required coverage.

The lidar sensors **106** are strategically positioned within the operational environment **104** to capture real-time spatial data. These sensors are configured to scan their surroundings using laser pulses, thereby detecting objects, measuring distances, and generating a representation of the environment for further analysis. The placement of the lidar sensors **106** is determined based on their field of view (FoV), range, and resolution to ensure that the maximum coverage is achieved while minimizing occlusion and blind spots.

To facilitate an optimized sensor deployment strategy, the system **100** divides the operational environment **104** into one or more subareas **108.** Each subarea **108** represents a designated portion of the operational environment **104** where a lidar sensor of the lidar sensors **106** may be positioned to provide coverage of the corresponding subarea. The system evaluates potential lidar sensor placements within each subarea of the one or more subareas **108** based on factors such as visibility, obstacle interference, and redundancy. Furthermore, the processing unit **102** is configured to assign a penalty score to each subarea, considering various penalty functions, including shading penalties, cost penalties, and coverage penalties, to ensure optimal sensor distribution.

In an embodiment, the processing unit may also be configured to scan the operational area **104** at a specific height **110** above the surface and/or ground of the operational area **104.** In this context, the specific height **110** refers to a predetermined height above the operational area **104** at which the lidar sensors **106** perform scanning operations. Specifically, the lidar sensors **106** are configured to scan the operational environment **104** at a minimum height of 1 meter above the ground surface or floor level. This positioning ensures that the lidar sensors **106** avoid interference from ground-level obstacles such as equipment, furniture, or personnel movement, thereby enhancing data accuracy. Furthermore, maintaining the specific height **110** of at least 1 meter enables the system **100** to capture a clearer and more comprehensive representation of the operational environment **104,** facilitating improved object detection, spatial mapping, and environmental monitoring

Furthermore, the processing unit **102** comprises an output generator module **102C** configured to generate a placement map. The placement map includes precise coordinates of the operational environment **104** specified for installation of the lidar sensors **106.** The placement map may also include orientation of each lidar sensor such that a comprehensive coverage of the operational environment **104** is achieved.

The system **100** leverages the above-described components to automate the deployment of lidar sensors **106** in a structured and efficient manner. By integrating site layout data, mathematical optimization techniques, and real-time environmental considerations, the system **100** ensures that the operational environment **104** is effectively monitored with minimal sensor redundancy and reduced installation complexity.

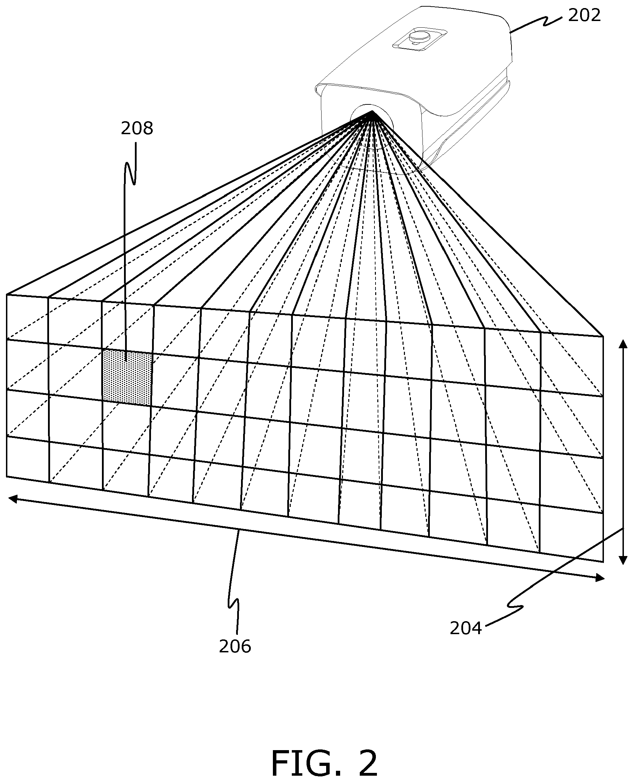

Referring to FIG. 2, illustrated is an illustration of an exemplary lidar sensor **202** projecting laser pulses into a Field of View (FoV), in accordance with an embodiment of the present disclosure. In this regard, the FoV is divided into a vertical FoV **204,** and a horizontal FoV **206** further indicating a depth amplitude **208.** The vertical FoV **204** refers to the angular range over which the lidar sensor is configured to detect objects in the vertical direction within the operational environment. Similarly, the horizontal FoV **206** refers to the angular range covered by the lidar sensor **202** in the horizontal plane, determining the extent of lateral coverage for monitoring the operational environment. The depth amplitude **208** represents the effective detection range of the lidar sensor **202,** indicating the maximum and minimum distances at which objects can be accurately detected, thereby influencing sensor placement for achieving optimal coverage.

In an embodiment, the vertical FoV **204** and the horizontal FoV **206** are key parameters utilized by the automated lidar sensors placement and optimization system to determine the optimal positioning and orientation of the lidar sensor **202.** For instance, the lidar sensor **202** with a wider vertical FoV may be positioned at an elevated height to enhance its ability to monitor objects at varying elevations within the operational environment, such as overhead structures, moving machinery, or stacked inventory. Conversely, the lidar sensor **202** with the extended horizontal FoV **206** may be deployed along perimeters or large open spaces to maximize coverage while minimizing the total number of sensors required. The system utilizes these parameters to generate an optimized placement map, ensuring efficient monitoring with minimal redundancy.

The automated lidar sensors placement and optimization system integrates the vertical FoV **204,** the horizontal FoV **206,** and the depth amplitude **208** when optimizing the lidar sensors deployment, ensuring minimal occlusion, reduced blind spots, and comprehensive environmental coverage. By leveraging these parameters, the system enhances the accuracy and reliability of lidar-based monitoring.

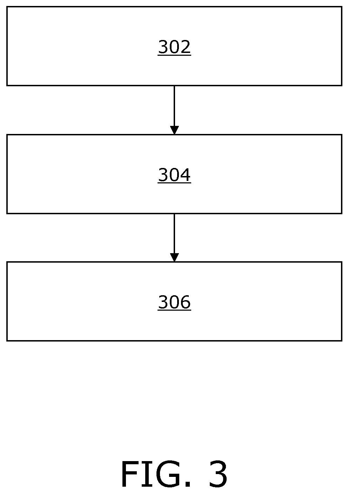

Referring to FIG. 3, illustrated are steps of a method for placement and optimization of lidar sensors in an operational environment, in accordance with an embodiment of the present disclosure. At step **302,** using a three-dimensional model integration module, a three-dimensional site layout data is received and analyzed to obtain environmental information of an operational environment. At step **304,** using a lidar placement algorithm, optimal quantity, positions and orientations of lidar sensor is calculated, based on the three-dimensional site layout data and lidar sensor configurations, the lidar sensor configuration comprising at least one of: a field-of-view (FoV) of the lidar sensors, range specifications of the lidar sensors, luminance of the lidar sensors; and. At step **306,** using an output generator module, a placement map is generated, specifying precise coordinates of the operational environment for installation of lidar sensors and orientations for each lidar sensor to achieve comprehensive coverage of the operational environment.

The aforementioned steps are only illustrative and other alternatives can also be provided where one or more steps are added, one or more steps are removed, or one or more steps are provided in a different sequence without departing from the scope of the claims herein.

## Claims

1. An automated lidar sensors placement and optimization system (100) comprising a processing unit (102) configured to:
receive and analyze, using a three-dimensional model integration module (102A), a three-dimensional site layout data to obtain environmental information of an operational environment (104);
calculate, using a lidar placement algorithm (102B), optimal quantity, positions and orientations of lidar sensor (106), based on the three-dimensional site layout data and lidar sensor configurations, the lidar sensor configuration comprising at least one of: a field-of-view (FoV) of the lidar sensors, range specifications of the lidar sensors, luminance of the lidar sensors; and
generate, using an output generator module (102C), a placement map, specifying precise coordinates of the operational environment for installation of lidar sensors and orientations for each lidar sensor to achieve comprehensive coverage of the operational environment.

2. The automated lidar sensors placement and optimization system (100) of claim 1, wherein the processing unit (102) is further configured to generate installation instructions for:
selection of at least one lidar sensor from amongst the lidar sensors (106) of distinct lidar sensors configurations, wherein each lidar sensor is configured to monitor a corresponding subarea of the operational environment (104), and
guiding installation of the at least one lidar sensor based on the placement map.

3. The automated lidar sensors placement and optimization system (100) of claim 2, wherein the processing unit (102) is further configured to employ at least one ground target and/or a precision jig for optimizing installation of the at least one lidar sensor of the lidar sensors (106).

4. The automated lidar sensors placement and optimization system (100) of any of the preceding claims 1 to 3, wherein the processing unit (102) is further configured to validate an optimal installation of a given lidar sensor (202) of the lidar sensors (106) when a coverage specification of the given lidar sensor is equal to or greater than a pre-defined coverage specification threshold.

5. The automated lidar sensors placement and optimization system (100) of any of the preceding claims 1 to 3, wherein the processing unit (102) is further configured to generate a notification when the optimal installation of a given lidar sensor (202) is validated.

6. The automated lidar sensors placement and optimization system (100) of any of the preceding claims 1 to 5, wherein the operational environment (104) is at a specific height (110) of at least 1 meter.

7. The automated lidar sensors placement and optimization system (100) of any of the preceding claims 1 to 6, wherein the processing unit (102) is further configured to determine cabling routes and/or cable lengths for installation of lidar sensors (106), based on the operational environment (104) and the placement plan.

8. The automated lidar sensors placement and optimization system (100) of any of the preceding claims 1 to 7, wherein the processing unit (102) is further configured to:
apply a penalty function to the lidar placement algorithm (102B) to determine distances between a central connection point and the at least one lidar sensor (202) of the lidar sensors (106); and
associating a penalty score corresponding to each distance determined between the central connection point and the at least one sensor, wherein higher penalty score correspond to longer cabling distance between the central connection point and the at least one lidar sensor.

9. The automated lidar sensors placement and optimization system (100) of claim 8, wherein the penalty function comprises a shading penalty function to account for objects in the FoV of the lidar sensors (106), and wherein the shading penalty function is configured to:
identify at least one shaded area within the operational environment (104) based on the three-dimensional site layout data and the lidar sensor configurations; and
assign a penalty score to each lidar sensor placement associated with reduced visibility due to shading, to optimize the lidar sensor placement.

10. The automated lidar sensors placement and optimization system (100) of any of the preceding claims 1 to 9, wherein the three-dimensional model integration module (102A) is compatible with standard architectural and engineering file formats, including DWG and OBJ.

11. The automated lidar sensors placement and optimization system (100) of any of the preceding claims 1 to 10, wherein the processing unit (102) is further configured to generate an operational occupancy grid, the operational occupancy grid comprising a representation of the operational environment (104) divided into discrete cells, each cell indicating whether it is occupied or free for a given lidar sensor placement.

12. The automated lidar sensors placement and optimization system (100) of claim 11, wherein the processing unit (102) is further configured to employ a process flow module to dynamically update the operational occupancy grid based on real-time environmental changes or operational requirements.

13. The automated lidar sensors placement and optimization system (100) of any of the preceding claims 1 to 12, wherein the lidar placement algorithm (102B) incorporates a surface reflection function to enhance visibility, and wherein the surface reflection function is configured to:
analyze reflective surfaces within the operational environment (104) to determine an impact thereof on the lidar sensor's performance; and
optimize the lidar sensor placement to leverage reflections for increased visibility in areas with limited direct line-of-sight coverage.

14. A method (300) for placement and optimization of lidar sensors (106) in an operational environment (104), the method comprising:
receiving and analyzing, using a three-dimensional model integration module (102A), a three-dimensional site layout data to obtain environmental information of an operational environment;
calculating, using a lidar placement algorithm (102B), optimal quantity, positions and orientations of lidar sensor (202), based on the three-dimensional site layout data and lidar sensor configurations, the lidar sensor configuration comprising at least one of: a field-of-view (FoV) of the lidar sensors, range specifications of the lidar sensors, luminance of the lidar sensors; and
generating, using an output generator module (102C), a placement map, specifying precise coordinates of the operational environment for installation of lidar sensors and orientations for each lidar sensor (202) to achieve comprehensive coverage of the operational environment.

15. The method of claim 14, further comprising generating installation instructions for:
selection of at least one lidar sensor (202) from amongst lidar sensors (106) of distinct lidar sensors configurations; and
guiding installation of the at least one lidar sensor based on the placement map.

16. The method of claim 14 or 15, further comprising:
validating an optimal installation of a given lidar sensor (202) of the lidar sensors (106) when a coverage specification of the given lidar sensor is equal to or greater than a pre-defined coverage specification threshold; and
generating a notification when the optimal installation of the given lidar sensor is validated.

17. The method of claim 14-16, further comprising at least one of:
employing at least one ground target and/or a precision jig for optimizing installation of the at least one lidar sensor (202) of the lidar sensors (106); and
determining cabling routes and/or cable lengths for installation of lidar sensors, based on the operational environment (104) and the placement plan.

18. The method of claim 17, further comprising
applying a penalty function to the lidar placement algorithm to determine distances between a central connection point and the at least one sensor (202) of the lidar sensors (106); and
associating a penalty score corresponding to each distance determined between the central connection point and the at least one lidar sensor, wherein higher penalty score corresponds to longer cabling distance between the central connection point and the at least one lidar sensor.

19. The method of claim 18, wherein the penalty function comprises a shading penalty function to account for objects in the FoV of the lidar sensors (106), and wherein the shading penalty function is configured to:
identify at least one shaded area within the operational environment (104) based on the three-dimensional site layout data and the lidar sensor configurations; and
assign a penalty score to each lidar sensor placement associated with reduced visibility due to shading, to optimize the lidar sensor placement.

20. The method of claims 14 to 19, further comprising generating an operational occupancy grid, the operational occupancy grid comprising a representation of the operational environment divided into discrete cells, each cell indicating whether it is occupied or free for a given lidar sensor placement.

21. The method of claim 20, further comprising employing a process flow module to dynamically update the operational occupancy grid based on real-time environmental changes or operational requirements.

22. The method of claims 1 to 21, wherein the lidar placement algorithm incorporates a surface reflection function to enhance visibility, and wherein the surface reflection function is configured to:
analyze reflective surfaces within the operational environment (104) to determine an impact thereof on the lidar sensor's performance; and
optimize the lidar sensor placement to leverage reflections for increased visibility in areas with limited direct line-of-sight coverage.

23. A computer program product comprising a non-transitory machine-readable data storage medium having stored thereon program instructions that, when executed by a processor, cause the processor to execute steps of a method of claim 14-22.
